# EUROPÄISCHE PATENTANMELDUNG

(11) **EP 1 932 621 A1**
(43) Veröffentlichungstag der Anmeldung: **18.06.2008**
(21) Anmeldenummer: 07019233.1
(22) Anmeldetag: 01.10.2007
(51) Int. Cl.: B24B 41/06

(54) **Anordnung zur Korrektur der Werkzeugabnützung in einer Schleif- und/oder Poliermaschine**

(30) Priorität: 15.12.2006 CH 20412006
(71) Anmelder: Wasag-Tool AG, 5036 Oberentfelden (CH)
(72) Erfinder: Bobst, Max, 4500 Solothurn (CH)
(74) Vertreter: Schaad, Balass, Menzl & Partner AG

(57) **Zusammenfassung**

Die Korrektur der Werkzeugabnützung in einer Schleif- und/oder Poliermaschine für Werkstücke (3) erfolgt durch Erzeugung einen konstanten Anpressdruckes zwischen Werkzeug und Werkstück (3). Zu diesem Zweck ist das Werkstück (3) in einer in allen deri Richtungen federnden Werkstückhalterung befestigt. Die federnde Werkstückhalterung bringt die gewählte Anpressdruck auf das Werkstück (3) auf. Die Werkstückhalterung ist mit einem in sich geschlossenen, nachgiebigen Element (9, 10) umgeben, das mit einem verdrängbaren Medium gefüllt ist und die Verschiebung der Werkstückhalterung ausgleicht.

## Beschreibung

Die vorliegende Erfindung betrifft eine Anordnung zur Korrektur der Werkzeugabnützung in einer Schleif- und/oder Poliermaschine für Werkstücke, mit einem drehbaren Werkzeug durch Erzeugung eines konstanten Anpressdruckes zwischen Werkzeug und Werkstück.

Aus der CH-A5-652959 ist eine Vorrichtung zum Schleifen und Polieren beschrieben. Bei dieser Vorrichtung wird die Abnützung des Werkzeuges dadurch kompensiert, dass der Anpressdruck zwischen dem flexiblen Werkzeug und dem Werkstück konstant gehalten wird. Um diesen konstanten Anpressdruck zu erhalten, ist eine Analog-Digital-Rechner eingesetzt, die auf entsprechende Stellmotoren wirkt. Zur Steuerung der Analog-Digital-Steuerung wird die Leistungsaufnahme des Antriebsmotors des Werrkzeuges abgegriffen. Diese Vorrichung ist kompliziert und mit erheblichen Kosten verbunden.

Die Aufgabe der vorliegenden Erfindung ist es, eine Anordnung zur Korrektur der Werkzeugabnützung in einer Schleif- und/oder Poliermaschine für die Oberfläche eines Werkstückes aufzubauen, die mit einfachen und kostengünstigen Mitteln, ohne besonderer Steuerung die Werzeugabnützung kompensieren kann.

Die gestellte Aufgabe ist dadurch gelöst, dass das Werkstück in einer in allen drei Richtungen federnden Werkstückhalterung mit drei Freiheitsgraden befestigt ist, wobei die federnde Werkstückhalterung die gewählte Anpressdruck auf das Werkstück aufbringt. Die Werkstückhalterung bringt den gewünschten Anpressdruck unabhängig von der Abnützung des Werkzeuges auf. Das Werkzeug ist an der Oberfläche des Werkstückes vorgespannt.

Die Werkstückhalterung ist mit einem in sich geschlossenen, nachgiebigen Element umgeben, das mit einem verdrängbaren Medium gefüllt ist. Das nachgiebige, mit einem verdrängbaren Medium gefüllte Element bringt den Anpressdruck auf das Werkstück auf.

Das nachgiebige Element bei Beanspruchung mit dem gewünschten Anpressdruck an einer Stelle das Medium lässt an die nicht beanspruchte Stelle des nach giebigen Elementes überströmen. Dadurch kompensiert das Medium die durch den Anpressdruck verursachte Verschiebung der Werkstückhalterung an den nicht beanspruchten Stellen durch Druckerhöhung des verdrängbaren Mediums.

Das verdrängbare Medium kann gasförmig sein. Das Gasförmige Medium kann Luft sein.

Das verdrängbare Medium kann flüssig sein, wie z. B. eine hydraulische Flüssigkeit.

Mit Vorteil ist das nachgiebige Element ein elastischer Schlauch. Ein elastischer, mit einem verdrängbaren Medium gefüllter Schlauch besitzt in der Regel eine ausreichende Elastizität.

Im folgenden wird ein Ausführungsbeispiel der Erfindung anhand der beiliegenden Zeichnungen näher beschrieben. Es zeigen:
Fig.1 eine Anordnung der Werkstückhalterung für eine Schleif und/oder Poliermaschine für wannenförmige Werkstücke,
Fig.2 eine schematische Darstellung der Werkstückeinspannvorrichtung der Werkstückhalterung.

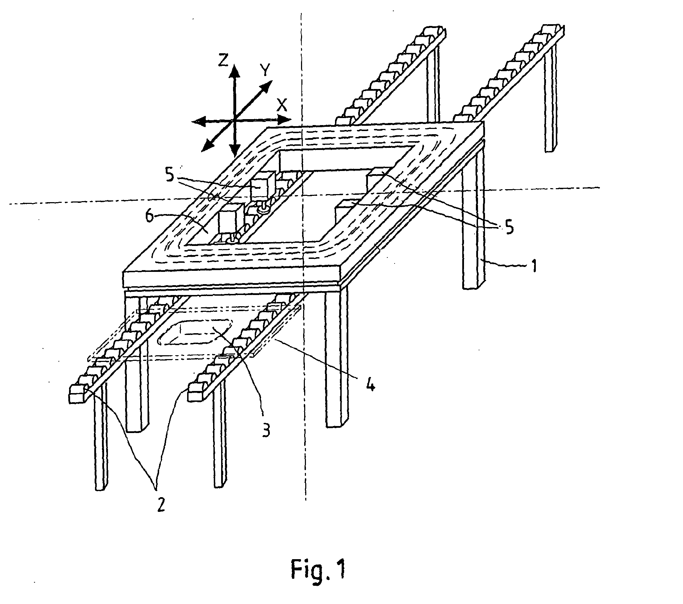

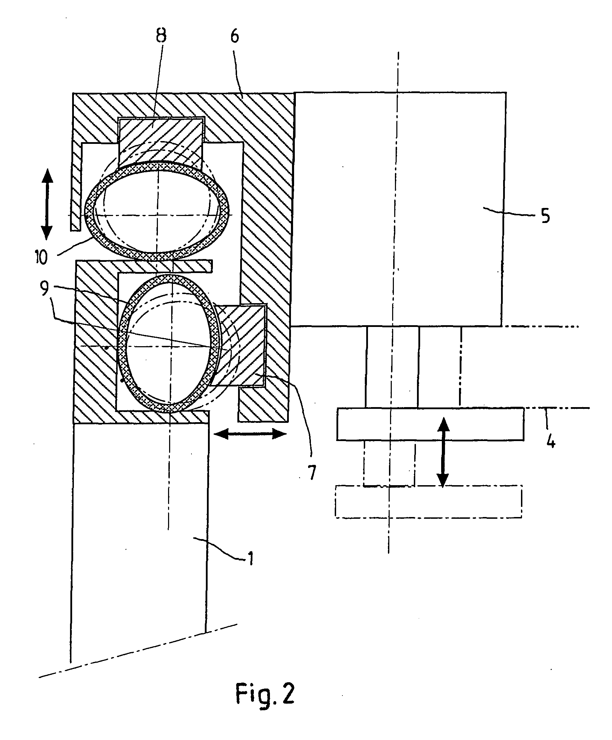

Die in Fig. 1 dargestellte Anordnung der Werkstückhalterung ist auf einem Tisch 1 über eine Förderstrecks 2 angeordnet. Das wannenförmige Werkstück 3 ist in diesem Beispiel ein Abwaschtrog und ist in einer Transferplatte 4 untergebracht. Die Transferplatte 4 mit dem Werkstück 3 wird an der vorgesehenen Stelle der Traaansferstrecke von den Werkstückeinspannvorrichtungen 5 erfasst und so mit dem beweglichen Ramen 6 der Druckausgleicheinrichtung in Verbindung gebracht. Die Werkstückeinspannvorrichtungen 5 sind am Ramen 6 der Druckausgleicheinrichtung befestigt und pneumatisch oder hydraulisch betätigt. Das zur Bearbeitung des Werstückes 3 vorgesehene, nicht dargestellte Werkzeug taucht in das Werkstück ein und drückt mit seiner Vorspannung das Werkstück 3 an den Ramen 6 der Duckausgleicheinrichtung. Das Werkzeug 3 ist in der Regel eine Schleifscheibe oder eine Polierbürste. Der Anpressdruck ist durch die federnde Abstützung des Ramens 6 im ortsfesten Tisch 1 bestimmt, wie Fig.2 es zeigt.

In Fig.2 ist eine Werkstückeinspannvorrichtung 5 mit einem Ausschnitt des mit ihr verbundenen Ramen 6 der Druckausgleicheinrichtung erkennbar. Der Ramen 6 ist in der drei Richtungen x, y, z (Fig.1) gefedert geführt. Die Gleitführung 7 erlaubt die Bewegung des Ramens 6 in der x, y Richtungje nach Bearbeitungsstelle am Werkstück 3. Die Gleitführung 8 ist für die gefederte Bewegung des Werkstückes 3 in der z-Achse zuständig. Die Gleitführungen 7 und 8 sind am ortsfesten Tisch 1 über die mit einem verdrängbaren Medium gefüllten Schläuche 9 und 10 abgestützt. Diese Schläuche 9 und 10 erstrecken sich um den ganzen Umfang des Ramens 6. Sobald das Werkzeug an einer Stelle des Umfanges des Werstückes 3 ansteht, werden die Schläuche 9 und 10 mit dem Anpressdruck angedrückt. Das verdrängbare Medium, das in diesem Ausführungsbeispiel Luft ist, wird von der beanspruchten Stelle verdrängt. Das verdrängbare Medium kann aber auch eine Flüssigkeit sein. Das verdrängte Medium wird an der der bearbeiteten Stelle gegenüberliegenden Stelle den Ramen 6 in Richtung der bearbeiteten Stelle verschieben und so die Verschiebung der bearbeiteten Stelle ausgleichen. Diese gefederte Verschiebung des Werkstückes 3 ist nötig, um die Werkzeugabnützung auszugleichen Der stätige Anpressdruch zwischen Werkzeug und Werkstück 3 ist durch die Steifigkeit der mit einem verdrängbaren Medium gefüllten Schläuche 9 und 10 gegeben.

Durch diese einfach und kostengünstige Anordnung ist es möglich die Werkzeugabnützung in eine Schleif- und/oder Poliermaschine für Werkstücke auszugleichen. Nur die vollständige Abnützung des Werkzeuges bildet die Grenze der Funktionsfähigkeit der beschriebenen Anordnung.

## Patentansprüche

1. Anordnung zur Korrektur der Werkzeugabnützung in einer Schleif- und/oder Poliermaschine für Werkstücke (3), mit einem drehbaren Werkzeug durch Erzeugung eines konstanten Anpressdruckes zwischen Werkzeug und Werkstück (3), **dadurch gekennzeichnet, dass** das Werkstück (3) in einer in allen drei Richtungen federnden Werkstückhalterung mit drei Freiheitsgraden befestigt ist, wobei die federnde Werkstückhalterung die gewählte Anpressdruck auf das Werkstück (3) aufbringt.

2. Anordnung nach Anspruch 1, **dadurch gekennzeichnet, dass** die Werkstückhalterung mit einem in sich geschlossenen, nachgiebigen Element umgeben ist, das mit einem verdrängbaren Medium gefüllt ist.

3. Anordnung nach Anspruch 2, **dadurch gekennzeichnet, dass** das nachgiebige Element bei Beanspruchung mit dem gewünschten Anpressdruck an einer Stelle das Medium an die nicht beanspruchte Stelle des nachgiebigen Elementes überströmen lässt.

4. Anordnung nach Anspruch 2, **dadurch gekennzeichnet, dass** das verdrängbare Medium gasförmig ist.

5. Anordnung nach Anspruch 4, **dadurch gekennzeichnet, dass** das gasförmige Medium Luft ist.

6. Anordnung nach Anspruch 2, **dadurch gekennzeichnet, dass** das verdrängbare Medium flüssig ist.

7. Anordnung nach Anspruch 2, **dadurch gekennzeichnet, dass** das nachgiebige Element ein elastischer Schlauch (9, 10) ist.
